# EUROPEAN PATENT SPECIFICATION

(11) **EP 2 312 685 B1**
(45) Date of publication and mention of the grant of the patent: **23.03.2016**
(21) Application number: 09805004.0
(22) Date of filing: 05.08.2009
(51) Int. Cl.: H01M 10/052, H01M 10/0567, H01M 10/0568

(54) **LITHIUM SECONDARY BATTERY COMPRISING A NON-AQUEOUS ELECTROLYTIC SOLUTION, METHOD FOR PRODUCING THE SAME, AND MIXED NON-AQUEOUS ELECTROLYTIC SOLUTION**
LITHIUMSEKUNDÄRBATTERIE UMFASSEND EINE NICHTWÄSSRIGE ELEKTROLYTLÖSUNG, VERFAHREN ZU DEREN HERSTELLUNG, SOWIE GEMISCHTE NICHTWÄSSRIGE ELEKTROLYTLÖSUNG
BATTERIE SECONDAIRE AU LITHIUM COMPRENANT UNE SOLUTION ÉLECTROLYTIQUE NON-AQUEUSE, SON PROCÉDÉ DE FABRICATION, ET SOLUTION ÉLECTROLYTIQUE NON-AQUEUSE MÉLANGÉE

(30) Priority: 06.08.2008 JP 2008202864
(43) Date of publication of application: 20.04.2011
(73) Proprietor: Mitsui Chemicals, Inc., Tokyo 105-7117 (JP)
(72) Inventor: NOGI, Hidenobu, Sodegaura-shi Chiba 299-0265 (JP); HAYASHI, Takashi, Sodegaura-shi Chiba 299-0265 (JP); HIWARA, Akio, Tokyo 105-7117 (JP)
(74) Representative: Raynor, Stuart Andrew
(86) International application number: PCT/JP2009/063874
(87) International publication number: WO 2010/016521

(56) References cited:
- EP-A1- 1 037 293
- EP-A1- 1 143 550
- EP-A1- 1 926 172
- JP-A- 2000 331 710
- JP-A- 2001 057 237
- JP-A- 2002 033 127
- JP-A- 2005 293 962
- JP-A- 2006 216 553
- JP-A- 2007 165 294
- US-A1- 2008 166 637

## Description

### Technical Field

The present invention relates to a lithium secondary battery, a method for producing the battery, and a mixed-type non-aqueous electrolytic solution.

### Related Art

Batteries using a non-aqueous electrolytic solution have a high voltage and a high energy density and also are highly reliable in terms of storability or the like, and therefore are widely used as a power supply for household electronic appliances.

Examples of such batteries include secondary batteries using a non-aqueous electrolytic solution, and one of the representative examples thereof is a lithium ion secondary battery.

As a non-aqueous solvent used in a non-aqueous electrolytic solution, for example, carbonate compounds having a high dielectric constant are known, and the use of various kinds of carbonate compounds has been proposed. As an electrolytic solution, for example, a solution is used in which an electrolyte such as LiBF₄, LiPF₆, LiClO₄, LiAsF₆, LiCF₃SO₃ or Li₂SiF₆ is mixed with a mixed solvent of a high-dielectric constant carbonate compound solvent as mentioned above, such as propylene carbonate or ethylene carbonate, and a low-viscosity solvent such as diethyl carbonate.

In recent years, various investigations have been conducted on non-aqueous electrolytic solutions.

US 2008/0166637 describes a nonaqueous electrolyte battery comprising a nonaqueous electrolyte which comprises an organosilicon compound and a sultone having an unsaturated hydrocarbon group. EP 1 926 172 describes an electrolyte for a rechargeable lithium battery which comprises a compound of formula A[OSi(CₘH₂ₘ₊₁)₃]₃ wherein A is P or B, and m is an integer ranging from 0 to 6, and a battery comprising the same. EP 1 143 550 describes a nonaqueous electrolyte battery comprising a boron-containing organosilicon compound. JP 2000 331710 describes a lithium ion electrochemical cell in which the electrolyte has at least one phosphate additive, which is described as aiding the capacity and lifetime of the cell. JP 2007 165294 describes a lithium secondary battery comprising a non-aqueous electrolyte which comprises an organosilicon compound.

For example, for the purpose of achieving reduction in battery resistance (in particular, reduction in resistance of the initial battery), improvement in battery life, improvement in safety, and the like, non-aqueous electrolytic solutions containing an organosilicon compound have been proposed (see, for example, Japanese Patent Application Laid-Open (JP-A) No. 2001-57237, JP-A No. 11-250919 and JP-ANo. 2001-319685).

### Disclosure of the Invention

### Problem to be Solved by the Invention

However, it has been proved that when an electrolytic solution containing a specific organosilicon compound is used, the effect of reducing the resistance of the initial battery may be small in some instances.

In view of the above, the present invention is aimed at the following achievements.

One object of the invention is to provide a lithium secondary battery comprising a non-aqueous electrolytic solution that includes an organosilicon compound having a metal atom, a phosphorus atom or a boron atom, and exhibits a small resistance of the initial battery.

Another object of the invention is to provide a method for producing a lithium secondary battery that includes the non-aqueous electrolytic solution as set forth above and exhibits a small resistance of the initial battery.

Yet another object of the invention is to provide a mixed-type non-aqueous electrolytic solution that includes an organosilicon compound having a metal atom, a phosphorus atom or a boron atom, and exhibits a small resistance of the initial battery. Means for Solving the Problem

The present inventors have conducted intensive studies and, as a result, have found that the small effect of reducing the resistance of the initial battery of non-aqueous electrolytic solutions including a specific organosilicon compound is due to generation of a fluorinated organosilicon compound as a result of reaction of the specific organosilicon compound and a fluorine-containing alkali metal salt used as an electrolyte.

That is, the specific means for solving the problems as described above are as follows.
<1> A lithium secondary battery comprising a non-aqueous electrolytic solution comprising an organosilicon compound having a metal atom, a phosphorus atom or a boron atom, and a fluorine-containing alkali metal salt, wherein
   the content of a fluorinated organosilicon compound generated by reaction of the organosilicon compound and the fluorine-containing alkali metal salt in the non-aqueous electrolytic solution is 0.2% by mass or less.
<2> The lithium secondary battery according to <1>, wherein the organosilicon compound is a compound represented by the following Formula [1]: 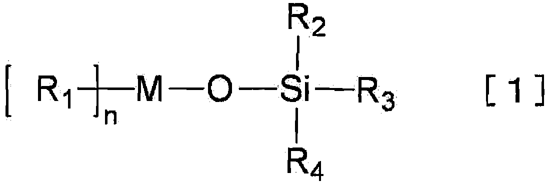 wherein in Formula [1], M represents a metal atom, a phosphorus atom, a boron atom or P=O; R₁ represents an alkyloxy group having 1 to 11 carbon atoms, a silyloxy group or an alkylsilyloxy group having 1 to 11 carbon atoms; n represents the number of R₁ that are bonded to M, and is equal to the oxidation number of M minus 1 or the oxidation number of M minus 3; when n is 2 or greater, the two or more of R₁ may be the same or different from each other; and R₂ to R₄ each independently represent an alkyl group having 1 to 11 carbon atoms, an alkenyl group having 1 to 11 carbon atoms, an alkyloxy group having 1 to 11 carbon atoms, or an aryl group having 6 to 11 carbon atoms.
<3> The lithium secondary battery according to <1>, wherein the content of the organosilicon compound is from 0.01% by mass to 5% by mass.
<4> A method for producing a lithium secondary battery comprising a step of injecting a non-aqueous electrolytic solution into a battery container, wherein
   the non-aqueous electrolytic solution comprises an organosilicon compound having a metal atom, a phosphorus atom or a boron atom, and a fluorine-containing alkali metal salt, and wherein
   the content of a fluorinated organosilicon compound generated by reaction of the organosilicon compound and the fluorine-containing alkali metal salt in the non-aqueous electrolytic solution is 0.2% by mass or less.
<5> The method for producing a lithium secondary battery according to <4>, further comprising, after the step of injecting the non-aqueous electrolytic solution into the battery container, a step of electrically charging the lithium secondary battery while the content of the fluorinated organosilicon compound in the non-aqueous electrolytic solution is 0.2% by mass or less.
<6> A mixed-type non-aqueous electrolytic solution comprising an organosilicon compound having a metal atom, a phosphorus atom or a boron atom, or a first composition comprising the organosilicon compound, and a second composition comprising a fluorine-containing alkali metal salt, wherein
   the organosilicon compound or the first composition is mixed with the second composition during the production of a battery, and wherein
   the mixed-type non-aqueous electrolytic solution is used while the content of a fluorinated organosilicon compound generated by reaction of the organosilicon compound and the fluorine-containing alkali metal salt in the obtained mixture is 0.2% by mass or less.

### Effects of the Invention

The invention provides a lithium secondary battery comprising a non-aqueous electrolytic solution that includes an organosilicon compound having a metal atom, a phosphorus atom or a boron atom, and exhibits a small resistance of the initial battery.

Furthermore, the invention provides a method for producing a lithium secondary battery that uses the non-aqueous electrolytic solution and exhibits a small resistance of the initial battery.

The invention also provides a mixed-type non-aqueous electrolytic solution that includes an organosilicon compound having a metal atom, a phosphorus atom or a boron atom, and exhibits a small resistance of the initial battery.

### Brief Description of the Drawing

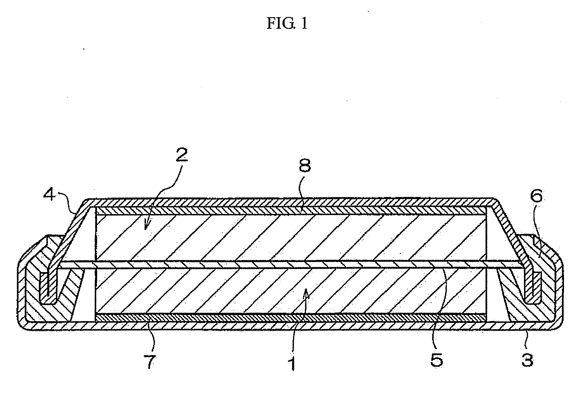

FIG. 1 is a schematic cross-sectional view of a coin-shaped battery representing an example of the lithium secondary battery of the invention.

### Best Mode for Carrying out the Invention

Details of the non-aqueous electrolytic solution, the lithium secondary battery, the method for producing the battery, and the mixed-type non-aqueous electrolytic solution of the invention are described.

### «Non-aqueous electrolytic solution»

The non-aqueous electrolytic solution of the invention contains an organosilicon compound having a metal atom, a phosphorus atom or a boron atom, and a fluorine-containing alkali metal salt. In the non-aqueous electrolytic solution, the content of the fluorinated organosilicon compound generated by reaction between the organosilicon compound and the fluorine-containing alkali metal salt is 0.2% by mass or less.

When a non-aqueous electrolytic solution has the composition of the invention, it is possible to reduce the resistance of the initial battery of a lithium secondary battery produced by using this non-aqueous electrolytic solution.

### <Organosilicon compound>

The organosilicon compound according to the invention is an organosilicon compound containing a metal atom, a phosphorus atom or a boron atom (hereinafter, also referred to as a "specific organosilicon compound").

More specifically, the specific organosilicon compound is a compound represented by Formula [1]: 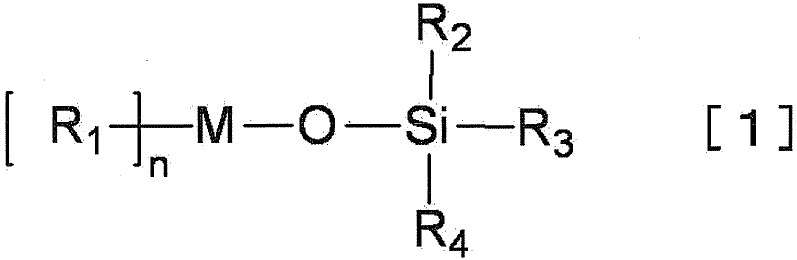 wherein in Formula [1], M represents a metal atom, a phosphorus atom, a boron atom or P=O; R₁ represents an alkyloxy group having 1 to 11 carbon atoms, a silyloxy group, or an alkylsilyloxy group having 1 to 11 carbon atoms; n represents the number of R₁ bonded to M, and is equal to the oxidation number of M minus 1 or the oxidation number of M minus 3; when n is 2 or greater, the two or more of R₁ may be the same or different from each other; and R₂ to R₄ each independently represent an alkyl group having 1 to 11 carbon atoms, an alkenyl group having 1 to 11 carbon atoms, an alkyloxy group having 1 to 11 carbon atoms, or an aryl group having 6 to 11 carbon atoms.

Specific examples of M include magnesium, boron, aluminum, silicon, phosphorus, P=O, scandium, titanium, vanadium, chromium, manganese, iron, cobalt, nickel, copper, zinc, germanium, tin, yttrium, zirconium, and niobium. Among these, aluminum, boron, phosphorus, P=O, titanium and zirconium are particularly preferable.

Specific examples of R₁ include a methoxy group, an ethoxy group, a propoxy group, an isopropoxy group, a normal butoxy group, a sec-butoxy group, a tert-butoxy group, a pentoxy group, a hexyloxy group, a phenoxy group, a trimethylsilyloxy group, a triethylsilyloxy group, a trimethoxysilyloxy group, and a triethoxysilyloxy group. Among these, a methoxy group, an ethoxy group, a propoxypropoxy group, an isopropoxy group, a normal butoxy group, and a trimethylsilyloxy group are preferable.

Specific examples of R₂, R₃ and R₄ include a methyl group, an ethyl group, a vinyl group, a propyl group, an isopropyl group, a 1-propenyl group, a 2-propenyl group, a 1-propynyl group, a 2-propynyl group, a butyl group, a sec-butyl group, a t-butyl group, a 1-butenyl group, a 2-butenyl group, a 3-butenyl group, a 2-methyl-2-propenyl group, a 1-methylenepropyl group, a 1-methyl-2-propenyl group, a 1,2-dimethylvinyl group, a 1-butynyl group, a 2-butynyl group, a 3-butynyl group, a pentyl group, a 1-methylbutyl group, a 2-methylbutyl group, a 3-methylbutyl group, a 1-methyl-2-methylpropyl group, a 2,2-dimethylpropyl group, a phenyl group, a methylphenyl group, an ethylphenyl group, a pentamethylphenyl group, a methoxy group, an ethoxy group, a propyloxy group, an isopropyloxy group, a butoxy group, a sec-butoxy group, a tert-butoxy group, a pentoxy group, a hexyloxy group, and a phenoxy group.

According to the invention, from the viewpoint of the solubility of additives in the non-aqueous electrolytic solution, the number of carbon atoms of R₁ to R₄ is preferably 4 or less, and specific preferable examples include methyl, ethyl, propyl, isopropyl, normal butyl, isobutyl, sec-butyl, methoxy, ethoxy, propoxy, isopropoxy, normal butoxy, isobutoxy, and sec-butoxy groups. Among them, the most preferable group is a methyl group.

Specific examples of the compound represented by Formula [1] include, for example, the following compounds.

Magnesium bis(trimethylsiloxide), tris(trimethylsilyl) borate, tris(trimethoxysilyl) borate, tris(triethylsilyl) borate, tris(triethoxysilyl) borate, tris(dimethylvinylsilyl) borate, tris(diethylvinylsilyl) borate, aluminum tris(trimethylsiloxide), dimethoxyaluminoxytrimethylsilane, dimethoxyaluminoxytrimethoxysilane, diethoxyaluminoxytrimethylsilane, diethoxyaluminoxytriethoxysilane, dipropyloxyaluminoxytrimethylsilane, dibutoxyaluminoxytrimethylsilane, dibutoxyaluminoxytrimethoxysilane, dibutoxyaluminoxytriethylsilane, dibutoxyaluminoxytriethoxysilane, dipropoxyaluminoxytriethoxysilane, dibutoxyaluminoxytripropylsilane, dibutoxyaluminoxytrimethoxysilane, dibutoxyaluminoxytriethoxysilane, dibutoxyaluminoxytripropyloxysilane, dibutoxyaluminoxytriphenoxysilane, tris(trimethylsilyl) phosphate, tris(triethylsilyl) phosphate, tris(tripropylsilyl) phosphate, tris(triphenylsilyl) phosphate, tris(trimethoxysilyl) phosphate, tris(triethoxysilyl) phosphate, tris(triphenoxysilyl) phosphate, tris(dimethylvinylsilyl) phosphate, tris(diethylvinylsilyl) phosphate, scandium tris(trimethylsiloxide), titanium tetrakis(trimethylsiloxide), titanium tetrakis(triethylsiloxide), titanium tetrakis(trimethoxysiloxide), titanium oxybis(trimethylsiloxide), vanadium oxytris(trimethylsiloxide), zinc bis(trimethylsiloxide), germanium tetrakis(trimethylsiloxide), tin tetrakis(trimethylsiloxide), yttrium tris(trimethylsiloxide), zirconium tetrakis(trimethylsiloxide), and niobium pentakis(trimethylsiloxide).

Among these, particularly preferable compounds include tris(trimethylsilyl) borate, tris(trimethoxysilyl) borate, tris(trimethylsilyl) phosphate, tris(trimethoxysilyl) phosphate, dimethoxyaluminoxytrimethoxysilane, diethoxyaluminoxytriethoxysilane, dipropoxyaluminoxytriethoxysilane, dibutoxyaluminoxytrimethoxysilane, dibutoxyaluminoxytriethoxysilane, titanium tetrakis(trimethylsiloxide), and titanium tetrakis(triethylsiloxide).

As the compound represented by Formula [1], combinations in which M is P=O, R₁ is an alkylsilyloxy group having 1 to 4 carbon atoms, n is 2, and R₂ to R₄ are alkyl groups having 1 to 4 carbon atoms, are preferred.

The specific organosilicon compound explained above may be contained in the non-aqueous electrolytic solution of the invention alone or two or more kinds in combination.

The content (total amount in the case of two or more kinds) of the specific organosilicon compound described above in the non-aqueous electrolytic solution is preferably 0.001 % by mass or greater, more preferably from 0.01 % to 15% by mass, even more preferably from 0.01% to 5% by mass, still more preferably from 0.1 % to 10% by mass, and particularly preferably from 0.3% to 5% by mass.

When the content of the specific organosilicon compound is in the range described above, the reduction decomposition reaction of the non-aqueous solvent that occurs during charging can be further suppressed, and the resistance of the initial battery can be further reduced. Furthermore, when the content of the specific organosilicon compound is in the range described above, it is possible to improve the battery life such as storage performance at high temperature or cycle performance, the charging/discharging efficiency of the battery, and the low temperature performance.

### <Non-aqueous solvent>

The non-aqueous electrolytic solution of the invention contains at least one kind of non-aqueous solvent.

The non-aqueous electrolytic solution according to the invention preferably contains a non-aqueous solvent that includes at least one of a cyclic carbonate represented by the following Formula [2a] or the following Formula [2b], and/or at least one chain carbonate, from the viewpoint of enhancing the battery performance (in particular, battery life, load performance and low temperature performance). 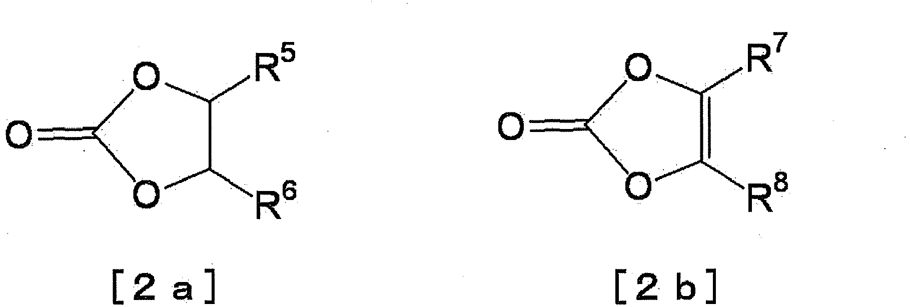 (wherein in Formula [2a] or Formula [2b], R⁵ to R⁸ each independently represent a hydrogen atom, an alkyl group having 1 to 6 carbon atoms, or a halogen element.)

The alkyl group is preferably an alkyl group having 1 to 3 carbon atoms, and specific examples include a methyl group, an ethyl group, and an n-propyl group.

Specific examples of the cyclic carbonate represented by Formula [2a] or Formula [2b] include ethylene carbonate, propylene carbonate, 1,2-butylene carbonate, 2,3-butylene carbonate, 1,2-pentylene carbonate, 2,3-pentylene carbonate, vinylene carbonate, 4,5-difluoroethylene carbonate, and 4-fluoroethylene carbonate.

In particular, ethylene carbonate and propylene carbonate, which exhibit a high dielectric constant, are suitably used. When improvements in the battery life is particularly intended, ethylene carbonate is particularly preferable. These cyclic carbonates may be used as a mixture of two or more kinds.

Specific examples of the chain carbonate include dimethyl carbonate, methyl ethyl carbonate, diethyl carbonate, methyl propyl carbonate, methyl isopropyl carbonate, and ethyl propyl carbonate. In particular, dimethyl carbonate, methyl ethyl carbonate and diethyl carbonate, which exhibit a low viscosity, are suitably used. These chain carbonates may be used as a mixture of two or more kinds.

When such a chain carbonate is contained in the non-aqueous solvent, the viscosity of the non-aqueous electrolytic solution can be further decreased and the solubility of the electrolyte can be further increased, thereby making it possible to obtain an electrolytic solution that exhibits excellent electrical conductivity at room temperature or low temperature. Accordingly, the low temperature performance of a battery, such as load performance at low temperature, can be improved.

The non-aqueous solvent according to the invention preferably contains at least one kind of cyclic carbonate represented by Formula [2a] or Formula [2b], and/or at least one kind of chain carbonate.

Specific examples of the combination of a cyclic carbonate and a chain carbonate include a combination of ethylene carbonate and dimethyl carbonate, a combination of ethylene carbonate and methyl ethyl carbonate, a combination of ethylene carbonate and diethyl carbonate, a combination of propylene carbonate and dimethyl carbonate, a combination of propylene carbonate and methyl ethyl carbonate, a combination of propylene carbonate and diethyl carbonate, a combination of ethylene carbonate, propylene carbonate and dimethyl carbonate, a combination of ethylene carbonate, propylene carbonate and methyl ethyl carbonate, a combination of ethylene carbonate, propylene carbonate and diethyl carbonate, a combination of ethylene carbonate, dimethyl carbonate and methyl ethyl carbonate, a combination of ethylene carbonate, dimethyl carbonate and diethyl carbonate, a combination of ethylene carbonate, propylene carbonate, dimethyl carbonate and methyl ethyl carbonate, and a combination of ethylene carbonate, propylene carbonate, dimethyl carbonate and diethyl carbonate.

The mixing ratio on the mass basis of the at least one kind of cyclic carbonate represented by Formula [2a] or Formula [2b] and the at least one kind of chain carbonate, in the non-aqueous solvent according to the invention, is from 0:100 to 100:0, preferably from 5:95 to 80:20, more preferably from 10:90 to 70:30, and particularly preferably from 15:85 to 55:45. When the mixing ratio is within the ratio as described above, an increase in the viscosity of the non-aqueous electrolytic solution can be further suppressed, and the degree of dissociation of the electrolyte can be further increased. Accordingly, the electrical conductivity of the electrolytic solution associated with the charging/discharging performance of a lithium secondary battery can be further increased.

It is also possible to use other kinds of solvents that are commonly widely used as a non-aqueous solvent for batteries in place of the solvents described above (cyclic carbonate and/or chain carbonate) or in addition to the solvents described above (cyclic carbonate and/or chain carbonate).

Specific examples of the other solvents include chain esters such as methyl formate, ethyl formate, propyl formate, methyl acetate, ethyl acetate, propyl acetate, methyl propionate, ethyl propionate, methyl butyrate, and methyl valerate; phosphoric acid esters such as trimethyl phosphate; chain ethers such as 1,2-dimethoxyethane, 1,2-diethoxyethane, diethyl ether, dimethyl ether, methyl ethyl ether, and dipropyl ether; cyclic ethers such as 1,4-dioxane, 1,3-dioxolane, tetrahydrofuran, 2-methyltetrahydrofuran, 3-methyl-1,3-dioxolane, and 2-methyl-1,3-dioxolane; amides such as dimethylformamide; chain carbamates such as methyl-N,N-dimethylcarbamate; cyclic esters such as γ-butyrolactone, γ-valerolactone, 3-methyl-γ-butyrolactone, and 2-methyl-γ-butyrolactone; cyclic sulfones such as sulfolane; cyclic carbamates such as N-methyloxazolidinone; cyclic amides such as N-methylpyrrolidone; cyclic ureas such as N,N-dimethylimidazolidinone;

cyclic carbonates such as 4,4-dimethyl-5-methylene ethylene carbonate, 4-methyl-4-ethyl-5-methylene ethylene carbonate, 4-methyl-4-propyl-5-methylene ethylene carbonate, 4-methyl-4-butyl-5-methylene ethylene carbonate, 4,4-diethyl-5-methylene ethylene carbonate, 4-ethyl-4-propyl-5-methylene ethylene carbonate, 4-ethyl-4-butyl-5-methylene ethylene carbonate, 4,4-dipropyl-5-methylene ethylene carbonate, 4-propyl-4-butyl-5-methylene ethylene carbonate, 4,4-dibutyl-5-methylene ethylene carbonate, 4,4-dimethyl-5-ethylidene ethylene carbonate, 4-methyl-4-ethyl-5-ethylidene ethylene carbonate, 4-methyl-4-propyl-5-ethylidene ethylene carbonate, 4-methyl-4-butyl-5-ethylidene ethylene carbonate, 4,4-diethyl-5-ethylidene ethylene carbonate, 4-ethyl-4-propyl-5-ethylidene ethylene carbonate, 4-ethyl-4-butyl-5-ethylidene ethylene carbonate, 4,4-dipropyl-5-ethylidene ethylene carbonate, 4-propyl-4-butyl-5-ethylidene ethylene carbonate, 4,4-dibutyl-5-ethylidene ethylene carbonate, 4-methyl-4-vinyl-5-methylene ethylene carbonate, 4-methyl-4-allyl-5-methylene ethylene carbonate, 4-methyl-4-methoxymethyl-5-methylene ethylene carbonate, 4-methyl-4-acryloxymethyl-5-methylene ethylene carbonate, and 4-methyl-4-allyloxymethyl-5-methylene ethylene carbonate;

vinylethylene carbonate derivatives such as 4-vinylethylene carbonate, 4,4-divinylethylene carbonate and 4,5-divinylethylene carbonate; alkyl-substituted vinylethylene carbonate derivatives such as 4-vinyl-4-methylethylene carbonate, 4-vinyl-5-methylethylene carbonate, 4-vinyl-4,5-dimethylethylene carbonate, 4-vinyl-5,5-dimethylethylene carbonate, and 4-vinyl-4,5,5-trimethylethylene carbonate; allyloxymethylethylene carbonate derivatives such as 4-allyloxymethylethylene carbonate and 4,5-diallyloxymethylethylene carbonate; alkyl-substituted allyloxymethylethylene carbonate derivatives such as 4-methyl-4-allyloxymethylethylene carbonate and 4-methyl-5-allyloxymethylethylene carbonate; acryloxymethylethylene carbonate derivatives such as 4-acryloxymethylethylene carbonate and 4,5-acryloxymethylethylene carbonate; alkyl-substituted acryloxymethylethylene carbonate derivatives such as 4-methyl-4-acryloxymethylethylene carbonate and 4-methyl-5-acryloxymethylethylene carbonate; sulfur-containing compounds such as sulfolane and dimethyl sulfate; phosphorus-containing compounds such as trimethyl phosphate and triethyl phosphate; and the compounds represented by the formulae listed below:

HO(CH₂CH₂O)ₐH, HO{CH₂CH(CH₃)O}_{b}H, CH₃O(CH₂CH₂O)_{c}H, CH₃O{CH₂CH(CH₃)O}_{d}H, CH₃O(CH₂CH₂O)ₑCH₃, CH₃O{CH₂CH(CH₃)O}_{f}CH₃, C₉H₁₉PhO(CH₂CH₂O)_{g}{CH(CH₃)O}ₕCH₃ (Ph represents a phenyl group), CH₃O{CH₂CH(CH₃)O}ᵢCO{O(CH₃)CHCH₂}ⱼOCH₃
(in the formulae, a to f each represents an integer of from 5 to 250; g to j each represents an integer of from 2 to 249; 5 ≤ g+h ≤ 250; and 5 ≤ i+j ≤ 250.)

### <Fluorine-containing alkali metal salt>

The non-aqueous electrolytic solution of the invention contains a fluorine-containing alkali metal salt as an electrolyte.

Specific examples of the fluorine-containing alkali metal salt include fluorine-containing lithium salts such as LiPF₆, LiBF₄, LiAsF₆, Li₂SiF₆, LiC₄F₉SO₃ and LiC₈F₁₇SO₃.

The fluorine-containing lithium salts represented by the formulae listed below may also be used.

LiOSO₂R₈, LiN(SO₂R₉)(SO₂R₁₀), LiC(SO₂R₁₁)(SO₂R₁₂)(SO₂R₁₃) and LiN(SO₂OR₁₄)(SO₂OR₁₅). In the formulae listed herein, R₈ to R₁₅ may be the same or different from each other, and each represents a perfluoroalkyl group having 1 to 6 carbon atoms.

The fluorine-containing lithium salts shown above may be used alone or as a mixture of two or more kinds.

Among these, in particular, LiPF₆, LiBF₄, LiOSO₂R₈, LiN(SO₂R₉)(SO₂R₁₀), LiC(SO₂R₁₁)(SO₂R₁₂)(SO₂R₁₃), and LiN(SO₂OR₁₄)(SO₂OR₁₅) are preferable.

The concentration of the fluorine-containing alkali metal salt in the non-aqueous electrolytic solution of the invention is preferably from 0.1 moles/liter to 3 moles/liter, and more preferably from 0.5 moles/liter to 2 moles/liter.

In addition to the fluorine-containing alkali metal salt described above, it is also possible to use other kinds of electrolytes that are commonly used in a non-aqueous electrolytic solution for lithium ion secondary batteries as the electrolyte in the invention.

The total concentration of electrolyte in the non-aqueous electrolytic solution of the invention is preferably from 0.1 moles/liter to 3 moles/liter, and more preferably from 0.5 moles/liter to 2 moles/liter.

The non-aqueous electrolytic solution according to the invention contains a specific organosilicon compound, a non-aqueous solvent, and a fluorine-containing alkali metal salt as an electrolyte, as essential constituent components. However, as necessary, other additives or the like may be added as long as the purpose of the invention is not impeded. For example, the non-aqueous electrolytic solution may contain, as an additive, at least one of vinylene carbonate, a vinylene carbonate derivative, 4,5-difluoroethylene carbonate and 4-fluoroethylene carbonate. It is also possible to include at least one kind of sultone compound such as 1,3-prop-1-ene sultone, as an additive.

The total content of these other additives is usually from 0.001% by mass to 30% by mass, preferably from 0.01% by mass to 7% by mass, and even more preferably from 0.2% by mass to 5% by mass, with respect to the non-aqueous electrolytic solution of the invention.

In the non-aqueous electrolytic solution of the invention, the content of a fluorinated organosilicon compound generated by reaction between the specific organosilicon compound and the fluorine-containing alkali metal salt is 0.2% by mass or less.

The content of the fluorinated organosilicon compound in the non-aqueous electrolytic solution is preferably 0.1% by mass or less, and most preferably 0% by mass (i.e., the fluorinated organosilicon compound is not contained at all).

One example of the fluorinated organosilicon compound is a compound obtained by substituting the [R₁]ₙ-M-O- moiety in Formula [1] by a fluorine atom. Specific examples include trialkylsilyl fluorides in which the carbon number of each alkyl moiety is independently 1 to 4, and more specific examples include trimethylsilyl fluoride.

The fluorinated organosilicon compound is a compound generated when the specific organosilicon compound mentioned above is decomposed in the non-aqueous electrolytic solution, and if the content of the fluorinated organosilicon compound in the non-aqueous electrolytic solution exceeds 0.2% by mass, battery performance may be impaired.

For example, when the specific organosilicon compound is added to the non-aqueous electrolytic solution, an effect of lowering the resistance of the initial battery of the lithium secondary battery produced by using the non-aqueous electrolytic solution can be achieved. However, this effect is weakened when a fluorinated organosilicon compound is contained in the non-aqueous electrolytic solution containing the specific organosilicon compound in an amount of greater than 0.2% by mass.

The fluorinated organosilicon compound is thought to be generated by decomposition of the specific organosilicon compound as a result of reaction with the fluorine-containing alkali metal salt contained in the non-aqueous electrolytic solution as an electrolyte.

For example, when tris(trimethylsilyl) phosphate as a specific organosilicon compound reacts with a fluorine-containing alkali metal salt (for example, LiPF₆ and/or LiBF₄) as an electrolyte, the trimethylsilyl group and the fluorine atom are bonded and trimethylsilyl fluoride as a fluorinated organosilicon compound is generated.

When the fluorinated organosilicon compound (for example, trimethylsilyl fluoride), is generated in a large amount, it undergoes reaction on the anode and generates a gas containing organosilicon and fluorine. Therefore, it can be confirmed that a fluorinated organosilicon compound is generated when a gas is generated. Alternatively, generation of a fluorinated organosilicon compound can be confirmed by a reduction in conductivity, since a fluorine-containing alkali metal salt, which is an electrolyte, is consumed in the reaction.

Therefore, when it is not desired to reduce the effects of decreasing the resistance of the initial battery of a lithium secondary battery, the fluorinated organosilicon compound is preferably not contained in the non-aqueous electrolytic solution at all, and if present, the content is preferably within a range that the effect exhibited by the specific organosilicon compound does not become too low for a non-aqueous electrolytic solution for lithium secondary batteries.

Specifically, it is necessary that the content of the fluorinated organosilicon compound in the non-aqueous electrolytic solution is 0.2% by mass or less.

In one preferable embodiment of using the non-aqueous electrolytic solution of the invention, charging and discharging are carried out before the specific organosilicon compound reacts with the electrolyte (fluorine-containing alkali metal salt). In this embodiment, since the specific organosilicon compound described above is taken in a coating film formed on the cathode and the anode, the risk of generating a fluorinated organosilicon compound is lowered.

### «Mixed-type non-aqueous electrolytic solution»

In the invention, from the viewpoint of suppressing the reaction between a specific organosilicon compound and a fluorine-containing alkali metal salt, it is also preferable to use, as a non-aqueous electrolytic solution, a set in which a specific organosilicon compound or a first composition including the specific organosilicon compound is combined with a second composition including a fluorine-containing alkali metal salt (in the present specification, this set may be referred to as "mixed-type non-aqueous electrolytic solution").

In this set, the specific organosilicon compound or the first composition and the second composition are mixed during the production of a battery to form a non-aqueous electrolytic solution. This non-aqueous electrolytic solution is used while the content of a fluorinated organosilicon compound in the mixed liquid obtained by mixing (i.e., non-aqueous electrolytic solution) is 0.2% by mass or less. The term "used" means that the non-aqueous electrolytic solution is injected into a battery container (more desirably, a step of charging is further included).

Namely, the mixed-type non-aqueous electrolytic solution of the invention includes a specific organosilicon compound or a first composition containing the specific organosilicon compound, and a second composition containing a fluorine-containing alkali metal salt, which components are mixed during the production of a battery, and the mixed-type non-aqueous electrolytic solution is used while the content of a fluorinated organosilicon compound generated by reaction between the organosilicon compound and the fluorine-containing alkali metal salt in the obtained mixed solution is 0.2% by mass or less.

The mixed-type non-aqueous electrolytic solution of the invention may be a two-liquid mixed-type non-aqueous electrolytic solution composed of a specific organosilicon compound and a second composition or a two-liquid mixed-type non-aqueous electrolytic solution composed of a first composition and a second composition, or alternatively, a three or more-liquid mixed-type non-aqueous electrolytic solution including a further a composition.

Among them, from the viewpoint of handleability or the like, a two-liquid mixed-type non-aqueous electrolytic solution is preferable, and a two-liquid mixed-type non-aqueous electrolytic solution composed of a specific organosilicon compound and a second composition is more preferable.

In the mixed-type non-aqueous electrolytic solution of the invention, additives as mentioned above (for example, vinylene carbonate or a vinylene carbonate derivative, and at least one kind of sultone compound such as 1,3-prop-1-ene sultone) may be contained in at least one of the first composition and the second composition.

The additive may be added at the time of mixing the first composition and the second composition.

In the case of a three or more-liquid mixed-type non-aqueous electrolytic solution, the additive may be added to the composition other than the first composition and the second composition.

One specific embodiment of the first composition is a composition including a specific organosilicon compound, a non-aqueous solvent, and optionally an additive as described above.

The content of the fluorine-containing alkali metal salt in the first composition is preferably 0.2% by mass or less, more preferably 0.1% by mass or less, and most preferably 0% by mass (i.e., an embodiment in which the first composition does not contain the fluorine-containing alkali metal salt).

One preferable embodiment of the second composition is a composition including a fluorine-containing alkali metal salt and a non-aqueous solvent. The second composition may further contain an additive as described above, as necessary.

The content of the specific organosilicon compound in the second composition is preferably 0.2% by mass or less, more preferably 0.1% by mass or less, and most preferably 0% by mass (that is, an embodiment in which the second composition does not contain the specific organosilicon compound).

### «Lithium secondary battery»

The lithium secondary battery of the invention is composed of an anode, a cathode, and the non-aqueous electrolytic solution as described above. In addition, as necessary, a separator may be provided between the anode and the cathode.

Examples of the anode active material that constitutes the anode include lithium metal, a lithium-containing alloy, a carbon material capable of being doped and capable of being dedoped with lithium ions; tin oxide, niobium oxide, vanadium oxide and titanium oxide which are capable of being doped and capable of being dedoped with lithium ions; and silicon which is capable of being doped and capable of being dedoped with lithium ions. Among these, a carbon material capable of being doped and capable of being dedoped with lithium ions is preferred. Such a carbon material may be graphite or amorphous carbon. Examples of the carbon material that may be used include activated carbon, carbon fiber, carbon black, mesocarbon microbeads, and natural graphite.

The anode active material is particularly preferably a carbon material having a plane interval (d002) at a (002) plane as measured by X-ray analysis of 0.340 nm or less. Furthermore, the anode active material is preferably graphite having a density of 1.70 g/cm³ or greater, or a highly crystalline carbon material having similar properties to those of graphite. By using a carbon material such as the above, the energy density of a battery may be further increased.

Examples of the cathode active material constituting the cathode include transition metal oxides or transition metal sulfides such as MoS₂, TiS₂, MnO₂ and V₂O₅; composite oxides containing lithium and a transition metal, such as LiCoO₂, LiMnO₂, LiMn₂O₄, LiNiO₂, LiNixCo_{(1-X})O₂ and LiFePO₄; and electroconductive polymer materials such as polyaniline, polythiophene, polypyrrole, polyacetylene, polyacene, and a dimercaptothiadiazole/polyaniline composite. Among these, in particular, a composite oxide containing lithium and a transition metal is preferable. When the anode is composed of metallic lithium or a lithium alloy, a carbon material may be used for the cathode. It is also possible to use a mixture of a composite oxide of lithium and a transition metal and a carbon material for the cathode.

The separator is a porous film, and usually a microporous polymer film is suitably used.

The microporous polymer film is particularly preferably a porous polyolefin film, and specific examples include a porous polyethylene film, a porous polypropylene film, and a multilayer film of a porous polyethylene film and a porous polypropylene film.

The lithium secondary battery of the invention may be formed into a cylindrical form, a coin form, a square form, or any other form. However, the basic structure of the battery is the same regardless of its shape, and the design may be modified according to the purposes. In the following, the structures of cylindrical-shaped and coin-shaped batteries are described, and the anode active material, the cathode active material and the separator used in the respective batteries are the same as those previously described.

For example, in the case of a cylindrical lithium secondary battery, an anode formed by applying an anode active material on an anode collector, and a cathode formed by applying a cathode active material on a cathode collector are rolled while interleaving therebetween a separator to which an non-aqueous electrolytic solution is injected, and this rolled-up assembly is contained in a battery can with insulating plates disposed above and below the rolled-up assembly.

The lithium secondary battery of the invention is also applicable to a coin-shaped lithium secondary battery. In a coin-shaped lithium secondary battery, a disk-shaped anode, a separator, a disk-shaped cathode, and stainless steel or aluminum plates are stacked in this order and contained.

One example of the lithium secondary battery of the invention is a coin-shaped battery shown in FIG. 1.

In the coin-shaped battery shown in FIG. 1, a disk-shaped anode 2, a separator 5, a disk-shaped cathode 1, and as necessary, stainless steel or aluminum spacer plates 7 and 8 are stacked in this order and placed between a cathode can 3 (hereinafter, also referred to as a "battery can" or a "battery container") and a sealing plate 4 (hereinafter, also referred to as a "battery can lid"). Furthermore, the non-aqueous electrolytic solution of the invention is injected into the cathode can 3. The cathode can 3 and the sealing plate 4 are sealed by caulking via a gasket 6.

### «Method for producing lithium secondary battery»

The lithium secondary battery of the invention is produced by placing the non-aqueous electrolytic solution, after adding the specific organosilicon compound thereto, in a container for a lithium secondary battery.

Specifically, as a method for producing the lithium secondary battery of the invention, the following method for producing a lithium secondary battery of the invention is suitable.

Namely, the method for producing a lithium secondary battery of the invention includes a step of injecting, into a battery container, a non-aqueous electrolytic solution including a specific organosilicon compound and a fluorine-containing alkali metal salt, and the content of a fluorinated organosilicon compound generated by reaction of the organosilicon compound with the fluorine-containing alkali metal salt in the non-aqueous electrolytic solution is 0.2% by mass or less.

The method for producing a lithium secondary battery of the invention may include other steps, as necessary.

The method for producing a lithium secondary battery of the invention preferably further includes, after the step of injecting the non-aqueous electrolytic solution into a battery container, a step of charging the battery while the content of a fluorinated organosilicon compound in the non-aqueous electrolytic solution is 0.2% by mass or less.

It has been proved by the present inventors that in the non-aqueous electrolytic solution containing the specific organosilicon compound described above, the effect of the specific organosilicon compound (the effect of reducing the resistance of the initial battery of the lithium secondary battery) disappears over time. Namely, as the organosilicon compound mentioned above reacts with the fluorine-containing alkali metal salt as an electrolyte, a fluorinated organosilicon compound (for example, trimethylsilyl fluoride) is generated over time, thereby increasing the content of the fluorinated organosilicon compound in the non-aqueous electrolytic solution.

It is necessary for the non-aqueous electrolytic solution of the invention that the content of the fluorinated organosilicon compound be 0.2% by mass or less, as previously described. In order to meet this requirement, the time for reaction between the specific organosilicon compound and the fluorine-containing alkali metal salt as the electrolyte is preferably shorter. Although it is most preferable to add the specific organosilicon compound to the non-aqueous electrolytic solution immediately before injecting the non-aqueous electrolytic solution into the battery container, the time from the addition to the injection may be within one week, preferably within three days, and more preferably within one day. This is because it is speculated that the reaction starts at the time when the specific organosilicon compound is added to the non-aqueous electrolytic solution, and if the electrolytic solution is left to stand at room temperature (23°C), almost 30% or more of the specific organosilicon compound decomposes within two days, almost 50% or more within one week, and almost 100% within one month.

### Examples

Hereinafter, the invention will be explained more specifically by way of the Examples, but the invention is not intended to be limited to these Examples.

The following experiments were performed at room temperature (23°C). The respective compounds are described as follows.
PRS: 1,3-prop-1-ene sultone
TMSP: tris(trimethylsilyl) phosphate
VC: vinylene carbonate
EC: ethylene carbonate
EMC: ethyl methyl carbonate
DMC: dimethyl carbonate

### <Evaluation of initial performance of battery>

A test battery was charged at a constant current of 1 mA and a constant voltage of 4.2 V, and discharged to 2.85 V at a constant current of 1 mA. This procedure was carried out ten cycles.

The charging/discharging efficiency at the first round was calculated from the charging capacity [mAh] and discharging capacity [mAh] at the first cycle, in accordance with the following formula.

Charging/discharging efficiency at first round [%] = (discharging capacity at first cycle [mAh]/charging capacity at first cycle [mAh]) x 100 [%]

After undergoing the 10th cycle, the test battery was charged at a constant voltage of 4.0 V, and the test battery after charging was cooled to -10°C in a constant temperature chamber.

Subsequently, impedance measurement of the cooled test battery was carried out using SOLARTRON, and the resistance value [Ω] at 0.2 Hz was defined as the resistance of the initial battery.

### <Content of trimethylsilyl fluoride>

The existence of trimethylsilyl fluoride was confirmed by carrying out measurement by NMR (nuclear magnetic resonance) analysis with F19-NMR.

For the analysis, a measurement sample was prepared by adding deuterated acetone under nitrogen.

When CFCl₃ is taken as the reference at 0 ppm, the peak for trimethylsilyl fluoride is detected at around -157.4 ppm.

### (Example 1)

### <Production of anode>

20 parts by mass of artificial graphite, 80 parts by mass of natural graphite-based graphite, 1 part by mass of carboxymethylcellulose, and 2 parts by mass of SBR latex were mixed with an aqueous solvent and kneaded, and a paste-like anode composite slurry was prepared.

Subsequently, this anode composite slurry was applied on an anode collector formed from a band-shaped copper foil having a thickness of 18 µm, and dried. Then, this assembly was compressed by roll pressing. An anode in the form of a sheet was thus obtained.

The coating density of the anode active material layer was 10 mg/cm², and the filling density was 1.5 g/ml.

### <Production of cathode>

90 parts by mass of LiCo₂O₄, 5 parts by mass of acetylene black, and 5 parts by mass of polyvinylidene fluoride were mixed with N-methylpyrrolidinone as a solvent and kneaded, and a paste-like cathode composite slurry was prepared.

Subsequently, this cathode composite slurry was applied on a cathode collector formed from a band-shaped aluminum foil having a thickness of 20 µm and dried. Then, this assembly was compressed by roll pressing. A cathode in the form of a sheet was obtained. The coating density of the cathode active material layer was 30 mg/cm², and the filling density was 2.5 g/ml.

### <Preparation of non-aqueous electrolytic solution>

As a non-aqueous solvent, EC, EMC and DMC were mixed at a proportion of 30:40:30 (mass ratio).

In this mixed solution, LiPF₆ was dissolved as an electrolyte (fluorine-containing alkali metal salt) such that the electrolyte concentration in the finally obtained non-aqueous electrolytic solution was 1 mole/liter.

Subsequently, PRS and VC were added as additives to the solution obtained in the above process such that the contents of PRS and VC in the finally obtained non-aqueous electrolytic solution were 0.5% by mass and 0.5% by mass, respectively.

Then, TMSP as a specific organosilicon compound was added to the solution to which PRS and VC were added, such that the content of TMSP in the finally obtained non-aqueous electrolytic solution was 1.0% by mass. The non-aqueous electrolytic solution was thus obtained.

The non-aqueous electrolytic solution was injected into a battery container on the same day as the day of the preparation (i.e., addition of TMSP to the "solution to which PRS and VC were added"), as described below.

### <Production of coin battery>

A coin-shaped anode and a coin-shaped cathode were prepared by punching out the anode described above into a disk having a diameter of 14 mm, and punching out the cathode described above into a disk having a diameter of 13 mm, respectively. Further, a separator was prepared by punching out a micro porous polyethylene film having a thickness of 20 µm into a disk having a diameter of 17 mm.

The coin-shaped anode, separator and coin-shaped cathode were stacked in this order and placed in a battery can (size 2032) made of stainless steel, and 20 µl of the non-aqueous electrolytic solution prepared in the above process was injected into the battery can so that the separator, cathode and anode were impregnated with the non-aqueous electrolytic solution. The non-aqueous electrolytic solution was injected into the battery container on the same day as the day of the preparation.

Further, an aluminum plate (thickness: 1.2 mm, diameter: 16 mm) and a spring were placed on the cathode, and the battery was sealed with a battery can lid by caulking via a gasket made of polypropylene. A coin-shaped lithium secondary battery having a diameter of 20 mm and a height of 3.2 mm was thus produced.

The initial performance of the obtained lithium secondary battery were evaluated.

### (Example 2)

A lithium secondary battery was obtained in a similar manner to Example 1, except that the content of TMSP in the non-aqueous electrolytic solution was changed to 2.0% by mass. The initial performance of the obtained lithium secondary battery were evaluated.

### (Example 3)

A lithium secondary battery was obtained in a similar manner to Example 1, except that TMSP was added to the "solution to which PRS and VC were added" such that the content of TMSP in the non-aqueous electrolytic solution was 1.0% by mass, and that the non-aqueous electrolytic solution was injected into the battery container after being allowed to stand for one day at room temperature. The initial performance of the obtained lithium secondary battery were evaluated.

### (Example 4)

A lithium secondary battery was obtained in a similar manner to Example 1, except that TMSP was added to the "solution to which PRS and VC were added" such that the content of TMSP in the non-aqueous electrolytic solution was 1.0% by mass, and that the non-aqueous electrolytic solution was injected into the battery container after being allowed to stand for three days at room temperature. The initial performance of the obtained lithium secondary battery were evaluated.

### (Reference Example)

A lithium secondary battery was obtained in a similar manner to Example 1, except that TMSP was not added to the non-aqueous electrolytic solution. The initial performance of the obtained lithium secondary battery were evaluated.

### (Comparative Example 1)

A lithium secondary battery was obtained in a similar manner to Example 1, except that TMSP was added to the "solution to which PRS and VC were added" such that the content of TMSP in the non-aqueous electrolytic solution was 1.0% by mass, and that the non-aqueous electrolytic solution was injected into the battery container after being allowed to stand for one week at room temperature. The initial performance of the obtained lithium secondary battery were evaluated.

### (Comparative Example 2)

A lithium secondary battery was obtained in a similar manner to Example 1, except that TMSP was added to the "solution to which PRS and VC were added" such that the content of TMSP in the non-aqueous electrolytic solution was 1.0% by mass, and that the non-aqueous electrolytic solution was injected into the battery container after being allowed to stand for four weeks at room temperature. The initial performance of the obtained lithium secondary battery were evaluated.

The evaluation results of the non-aqueous electrolytic solutions and the batteries used in the test are shown in Table 1. The symbol "-" in Table 1 indicates that no additive was added.

The content of trimethylsilyl fluoride in the non-aqueous electrolytic solution was measured by NMR under the conditions as described above.

**Table 1**

| | PRS [mass%] | VC [mass%] | TMSP [mass%] | Amount of trimethylsilyl fluoride [mass%] | First round efficiency [%] | First round discharging capacity [mAh] | Resistance of Initial battery [Ω] |
|---|---|---|---|---|---|---|---|
| Example 1 | 0.5 | 0.5 | 1.0 | 0 | 92.0 | 4.1 | 120 |
| Example 2 | 0.5 | 0.5 | 2.0 | 0 | 91.7 | 4.1 | 110 |
| Example 3 | 0.5 | 0.5 | 1.0 | 0.1 | 92.0 | 4.1 | 122 |
| Example 4 | 0.5 | 0.5 | 1.0 | 0.2 | 92.0 | 4.1 | 125 |
| Reference Example | 0.5 | 0.5 | - | 0 | 91.7 | 4.3 | 150 |
| Comparative Example 1 | 0.5 | 0.5 | 1.0 | 0.4 | 92.0 | 4.0 | 140 |
| Comparative Example 2 | 0.5 | 0.5 | 1.0 | 0.7 | 92.2 | 4.1 | 150 |

### (Results and Discussion)

From the results obtained in Table 1, it was confirmed that when a specific organosilicon compound was added to the "solution to which PRS and VC were added" to prepare a non-aqueous electrolytic solution, and the non-aqueous electrolytic solution after the addition was injected into a battery container without being allowed to stand for a long time, the resistance of the initial battery of the lithium secondary battery could be reduced.

On the other hand, it was proved that when the non-aqueous electrolytic solution after being added with a specific organosilicon compound and being allowed to stand for a long time was injected into the battery container, it was difficult to achieve the effect of lowering the initial resistance of the specific organosilicon compound. The cause for this is thought to be the reaction between the specific organosilicon compound and the fluorine-containing alkali metal salt as an electrolyte.

The contents of trimethylsilyl fluoride in the non-aqueous electrolytic solutions prepared in Examples 1 to 4 were 0.2% by mass or less.

## Claims

1. A lithium secondary battery comprising a non-aqueous electrolytic solution comprising an organosilicon compound having a metal atom, a phosphorus atom or a boron atom, and a fluorine-containing alkali metal salt, wherein
the content of a fluorinated organosilicon compound generated by reaction of the organosilicon compound and the fluorine-containing alkali metal salt in the non-aqueous electrolytic solution is 0.2% by mass or less.

2. The lithium secondary battery according to claim 1, wherein the organosilicon compound is a compound represented by the following Formula [1]: 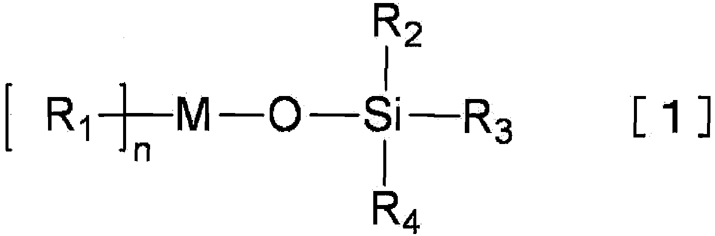 wherein in Formula [1], M represents a metal atom, a phosphorus atom, a boron atom or P=O; R₁ represents an alkyloxy group having 1 to 11 carbon atoms, a silyloxy group or an alkylsilyloxy group having 1 to 11 carbon atoms; n represents the number of R₁ that are bonded to M, and is equal to the oxidation number of M minus 1 or the oxidation number of M minus 3; when n is 2 or greater, the two or more of R₁ may be the same or different from each other; and R₂ to R₄ each independently represent an alkyl group having 1 to 11 carbon atoms, an alkenyl group having 1 to 11 carbon atoms, an alkyloxy group having 1 to 11 carbon atoms, or an aryl group having 6 to 11 carbon atoms.

3. The lithium secondary battery according to claim 1, wherein the content of the organosilicon compound is from 0.01% by mass to 5% by mass.

4. A method for producing a lithium secondary battery comprising a step of injecting a non-aqueous electrolytic solution into a battery container, wherein
the non-aqueous electrolytic solution comprises an organosilicon compound having a metal atom, a phosphorus atom or a boron atom, and a fluorine-containing alkali metal salt, and wherein
the content of a fluorinated organosilicon compound generated by reaction of the organosilicon compound and the fluorine-containing alkali metal salt in the non-aqueous electrolytic solution is 0.2% by mass or less.

5. The method for producing a lithium secondary battery according to claim 4, further comprising, after the step of injecting the non-aqueous electrolytic solution into the battery container, a step of electrically charging the lithium secondary battery while the content of the fluorinated organosilicon compound in the non-aqueous electrolytic solution is 0.2% by mass or less.

6. A mixed-type non-aqueous electrolytic solution comprising an organosilicon compound having a metal atom, a phosphorus atom or a boron atom, or a first composition comprising the organosilicon compound, and a second composition comprising a fluorine-containing alkali metal salt, wherein
the organosilicon compound or the first composition is mixed with the second composition during the production of a battery, and wherein
the mixed-type non-aqueous electrolytic solution is used while the content of a fluorinated organosilicon compound generated by reaction of the organosilicon compound and the fluorine-containing alkali metal salt in the obtained mixture is 0.2% by mass or less.

## Patentansprüche

1. Lithium-Sekundärbatterie, umfassend eine nicht-wässrige Elektrolytlösung, umfassend eine Organosiliciumverbindung mit einem Metallatom, einem Phosphoratom oder einem Boratom und ein Fluor enthaltendes Alkalimetallsalz, wobei
der Gehalt einer fluorierten Organosiliciumverbindung, gebildet durch Reaktion der Organosiliciumverbindung und des Fluor enthaltenden Alkalimetallsalzes, in der nicht-wässrigen Elektrolytlösung 0,2 Massen-% oder weniger ist.

2. Lithium-Sekundärbatterie gemäß Anspruch 1, worin die Organosiliciumverbindung eine Verbindung mit der folgenden Formel [1] ist: 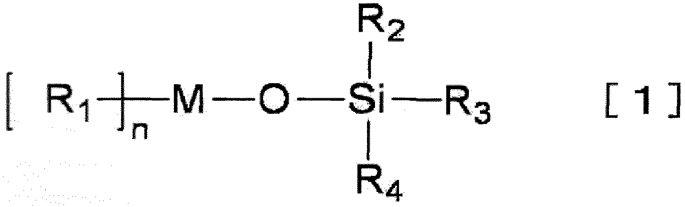 worin in der Formel [1] M für ein Metallatom, ein Phosphoratom, ein Boratom oder P=O steht, R₁ für eine Alkyloxygruppe mit 1 bis 11 Kohlenstoffatomen, eine Silyloxygruppe oder eine Alkylsilyloxygruppe mit 1 bis 11 Kohlenstoffatomen steht; n für die Anzahl von R₁ steht, die an M gebunden ist, und gleich der Oxidationszahl von M minus 1 oder der Oxidationszahl von M minus 3 ist; wenn n 2 oder größer ist, die zwei oder mehr R₁ gleich oder verschieden voneinander sein können; und R₂ bis R₄ jeweils unabhängig voneinander für eine Alkylgruppe mit 1 bis 11 Kohlenstoffatomen, eine Alkenylgruppe mit 1 bis 11 Kohlenstoffatomen, eine Alkyloxygruppe mit 1 bis 11 Kohlenstoffatomen oder eine Arylgruppe mit 6 bis 11 Kohlenstoffatomen stehen.

3. Lithium-Sekundärbatterie gemäß Anspruch 1, worin der Gehalt der Organosiliciumverbindung 0,01 Massen-% bis 5 Massen-% ist.

4. Verfahren zur Herstellung einer Lithium-Sekundärbatterie, umfassend einen Schritt des Injizierens einer nicht-wässrigen Elektrolytlösung in einen Batteriebehälter, wobei
die nicht-wässrige Elektrolytlösung eine Organosiliciumverbindung mit einem Metallatom, einem Phosphoratom oder einem Boratom und ein Fluor enthaltendes Alkalimetallsalz umfasst, und wobei
der Gehalt einer fluorierten Organosiliciumverbindung, gebildet durch Reaktion der Organosiliciumverbindung und des Fluor enthaltenden Alkalimetallsalzes, in der nicht-wässrigen Elektrolytlösung 0,2 Massen-% oder weniger ist.

5. Verfahren zur Herstellung einer Lithium-Sekundärbatterie gemäß Anspruch 4, zusätzlich umfassend nach dem Schritt des Injizierens der nicht-wässrigen Elektrolytlösung in den Batteriebehälter einen Schritt des elektrischen Aufladens der Lithium-Sekundärbatterie, während der Gehalt der fluorierten Organosiliciumverbindung in der nicht-wässrigen Elektrolytlösung 0,2 Massen-% oder weniger ist.

6. Gemischte nicht-wässrige Elektrolytlösung, umfassend eine Organosiliciumverbindung mit einem Metallatom, einem Phosphoratom oder einem Boratom oder eine erste Zusammensetzung, umfassend die Organosiliciumverbindung, und eine zweite Zusammensetzung, umfassend ein Fluor enthaltendes Alkalimetallsalz, wobei
die Organosiliciumverbindung oder die erste Zusammensetzung mit der zweiten Zusammensetzung während der Herstellung einer Batterie gemischt wird, und wobei
die gemischte nicht-wässrige Elektrolytlösung verwendet wird, während der Gehalt einer fluorierten Organosiliciumverbindung, gebildet durch Reaktion der Organosiliciumverbindung und des Fluor enthaltenden Alkalimetallsalzes, in der erhaltenen Mischung 0,2 Massen-% oder weniger ist.

## Revendications

1. Batterie secondaire au lithium comprenant une solution électrolytique non aqueuse comprenant un composé organosilicium comportant un atome de métal, un atome de phosphore ou un atome de bore, et un sel de métal alcalin contenant du fluor, dans laquelle
la teneur d'un composé organosilicium fluoré produit par réaction du composé organosilicium et du sel de métal alcalin contenant du fluor dans la solution électrolytique non aqueuse est de 0,2 % en masse ou moins.

2. Batterie secondaire au lithium selon la revendication 1, dans laquelle le composé organosilicium est un composé représenté par la Formule [1] suivante : 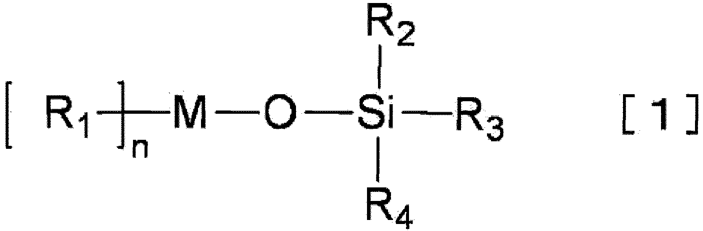 dans laquelle dans la Formule [1], M représente un atome de métal, un atome de phosphore, un atome de bore ou un groupe P=O ; R₁ représente un groupe alkyloxy comportant de 1 à 11 atomes de carbone, un groupe silyloxy ou un groupe alkylsilyloxy comportant de 1 à 11 atomes de carbone ; n représente le nombre de R₁ qui sont liés à M, et est égal au degré d'oxydation de M moins 1 ou au degré d'oxydation de M moins 3 ; lorsque n est supérieur ou égal à 2, les deux ou plusieurs R₁ peuvent être identiques les uns aux autres ou différents les uns des autres ; et les radicaux R₂ à R₄ représentent chacun indépendamment un groupe alkyle comportant de 1 à 11 atomes de carbone, un groupe alcényle comportant de 1 à 11 atomes de carbone, un groupe alkyloxy comportant de 1 à 11 atomes de carbone ou un groupe aryle comportant de 6 à 11 atomes de carbone.

3. Batterie secondaire au lithium selon la revendication 1, dans laquelle la teneur du composé organosilicium est de 0,01 % en masse à 5 % en masse.

4. Procédé de fabrication d'une batterie secondaire au lithium comprenant une étape d'injection d'une solution électrolytique non aqueuse dans un boîtier de batterie, dans lequel
- la solution électrolytique non aqueuse comprend un composé organosilicium comportant un atome de métal, un atome de phosphore ou un atome de bore, et un sel de métal alcalin contenant du fluor, et dans lequel
- la teneur d'un composé organosilicium fluoré produit par réaction du composé organosilicium et du sel de métal alcalin contenant du fluor dans la solution électrolytique non aqueuse est de 0,2 % en masse ou moins.

5. Procédé de fabrication d'une batterie secondaire au lithium selon la revendication 4, comprenant en outre, après l'étape d'injection de la solution électrolytique non aqueuse dans le boîtier de batterie, une étape de chargement électrique de la batterie secondaire au lithium alors que la teneur du composé organosilicium fluoré dans la solution électrolytique non aqueuse est de 0,2 % en masse ou moins.

6. Solution électrolytique non aqueuse mixte comprenant un composé organosilicium comportant un atome de métal, un atome de phosphore ou un atome de bore, ou une première composition comprenant le composé organosilicium, et une deuxième composition comprenant un sel de métal alcalin contenant du fluor, dans laquelle
- le composé organosilicium ou la première composition est mélangé(e) avec la deuxième composition au cours de la fabrication d'une batterie, et dans laquelle
- la solution électrolytique non aqueuse mixte est utilisée alors que la teneur d'un composé organosilicium fluoré produit par réaction du composé organosilicium et du sel de métal alcalin contenant du fluor dans le mélange obtenu est de 0,2 % en masse ou moins.
